# EUROPÄISCHE PATENTANMELDUNG

(11) **EP 2 490 309 A2**
(43) Veröffentlichungstag der Anmeldung: **22.08.2012**
(21) Anmeldenummer: 12154608.9
(22) Anmeldetag: 09.02.2012
(51) Int. Cl.: H02B 1/56, H02B 13/025

(54) **Elektrische Schaltanlage, insbesondere luftisolierte Mittelspannungsschaltanlage**

(30) Priorität: 18.02.2011 DE 102011004424
(71) Anmelder: Schneider Electric Sachsenwerk GmbH, 93055 Regensburg (DE)
(72) Erfinder: Fräde, Holger, 93049 Regensburg (DE)
(74) Vertreter: Dreiss

(57) **Zusammenfassung**

Es wird eine elektrische Schaltanlage (10) beschrieben, insbesondere eine luftisolierte Mittelspannungsschaltanlage. Die Schaltanlage (10) weist eine Mehrzahl von Schaltfeldern (12) auf, die nebeneinander angeordnet sind. Weiterhin ist ein Ableitungskanal (15) vorhanden, über den Luft oder Gas aus dem Innenraum der Schaltfelder (12) nach außen ableitbar ist. Der Ableitungskanal (15) ist oberhalb der Schaltfelder (15) angeordnet und erstreckt sich zumindest über einen Teil der Mehrzahl der Schaltfelder (12). Der Ableitungskanal (15) ist über Öffnungen mit dem Innenraum der Schaltfelder (12) verbunden. Dem Ableitungskanal (15) ist mindestens ein Lüfter (19, 28, 33) zugeordnet, mit dem eine Luft- oder Gasströmung in dem Ableitungskanal (15) erzeugbar ist.

## Beschreibung

Die Erfindung betrifft eine elektrische Schaltanlage, insbesondere eine luftisolierte Mittelspannungsschaltanlage.

Eine derartige Schaltanlage weist üblicherweise eine Mehrzahl von Schaltfeldern auf, die nebeneinander angeordnet sind. Weiterhin ist häufig ein Ableitungskanal vorhanden, über den Luft oder Gas aus dem Innenraum der Schaltfelder nach außen ableitbar ist.

Dieser sogenannte Druckentlastungskanal ist dazu vorgesehen, die in einem Fehlerfall in der Schaltanlage, beispielsweise bei einem sogenannten Störlichtbogen entstehenden, erhitzten Gase nach außen abzuführen. Der Druckentlastungskanal ist üblicherweise mit einer Klappe oder dergleichen versehen, die im normalen Betrieb der Schaltanlage geschlossen ist, und die nur im Fehlerfall geöffnet wird, so dass die erhitzten Gase in den Druckentlastungskanal abströmen können.

Im normalen Betrieb der Schaltanlage geben die elektrischen Komponenten der einzelnen Schaltfelder Wärme ab. Diese Wärme kann aufgrund der verschlossenen Klappe üblicherweise nicht über den Druckentlastungskanal nach außen gelangen. Der Innenraum der Schaltfelder erwärmt sich damit. Dies muss üblicherweise bei der Auslegung der elektrischen Komponenten der einzelnen Schaltfelder berücksichtigt werden. Häufig führt dies zu einem sogenannten De-Rating der Schaltanlage dahingehend, dass die Schaltanlage größer ausgelegt werden muss als dies an sich erforderlich ist.

Aufgabe der Erfindung ist es, eine im Vergleich zum Stand der Technik verbesserte elektrische Schaltanlage zu schaffen.

Die Erfindung löst diese Aufgabe durch eine elektrische Schaltanlage nach dem Anspruch 1.

Bei der erfindungsgemäßen Schaltanlage ist der Ableitungskanal oberhalb der Schaltfelder angeordnet und erstreckt sich zumindest über einen Teil der Mehrzahl der Schaltfelder. Der Ableitungskanal ist über Öffnungen mit dem Innenraum der Schaltfelder verbunden. Dem Ableitungskanal ist mindestens ein Lüfter zugeordnet, mit dem eine Luft- oder Gasströmung in dem Ableitungskanal erzeugbar ist.

Die Erfindung bringt den Vorteil mit sich, dass die im normalen Betrieb der Schaltanlage entstehende Wärme durch natürliche Konvektion in den Ableitungskanal transportiert wird und dann dort von der von dem Lüfter erzeugten Luftoder Gasströmung nach außen abtransportiert wird.

Durch die Erfindung wird somit eine Erwärmung des Innenraums der Schaltfelder weitgehend vermieden. Dies ist gleichbedeutend damit, dass ein De-Rating der Schaltanlage dahingehend, dass die Schaltanlage größer ausgelegt werden muss als dies an sich erforderlich ist, nicht gegeben ist.

Bei vorteilhaften Weiterbildungen der Erfindung ist der Lüfter an einem Ende des Ableitungskanals angeordnet oder es befindet sich der Lüfter innerhalb des Ableitungskanals oder der Lüfter ist oberhalb des Ableitungskanals oder etwa auf derselben Höhe wie der Ableitungskanal, aber in horizontaler Richtung vor oder hinter dem Ableitungskanal angeordnet. Durch diese Anordnungen des Lüfters kann auf besonders einfache Weise eine Luft- oder Gasströmung in dem Ableitungskanal erzeugt werden.

Bei einer besonders vorteilhaften Ausgestaltung der Erfindung ist dem Lüfter mindestens eine Verschlussklappe zugeordnet, mit der/denen der Lüfter von dem Innenraum der Schaltfelder abtrennbar ist. Die Verschlussklappe ist im normalen Betrieb der elektrischen Schaltanlage geöffnet, so dass - wie erläutert wurde - in den Schaltfeldern entstehende Wärme in den Ableitungskanal abgegeben und von dort nach außen abtransportiert werden kann. Nur im Fehlerfall wird die Verschlussklappe durch den dabei entstehenden Überdruck geschlossen, so dass der Lüfter in diesem Fall von dem Innenraum der Schaltanlage abgetrennt ist. Eine Schädigung des Lüfters durch die im Fehlerfall entstehenden heißen Gase wird damit vermieden.

Bei einer anderen Weiterbildung der Erfindung ist der Lüfter mit einem Ansaugkanal verbunden, der vorzugsweise in einer etwa vertikalen Richtung angeordnet ist. Über diesen Ansaugkanal kann der Lüfter aufgrund des in vertikaler Richtung vorhandenen Temperaturgradienten Luft oder Gas mit einer geringeren Temperatur ansaugen. Damit ist es möglich, gegebenenfalls nur an dem offenen Ende des Ansaugkanals im unteren Bereich einen einzigen Lüfter vorzusehen.

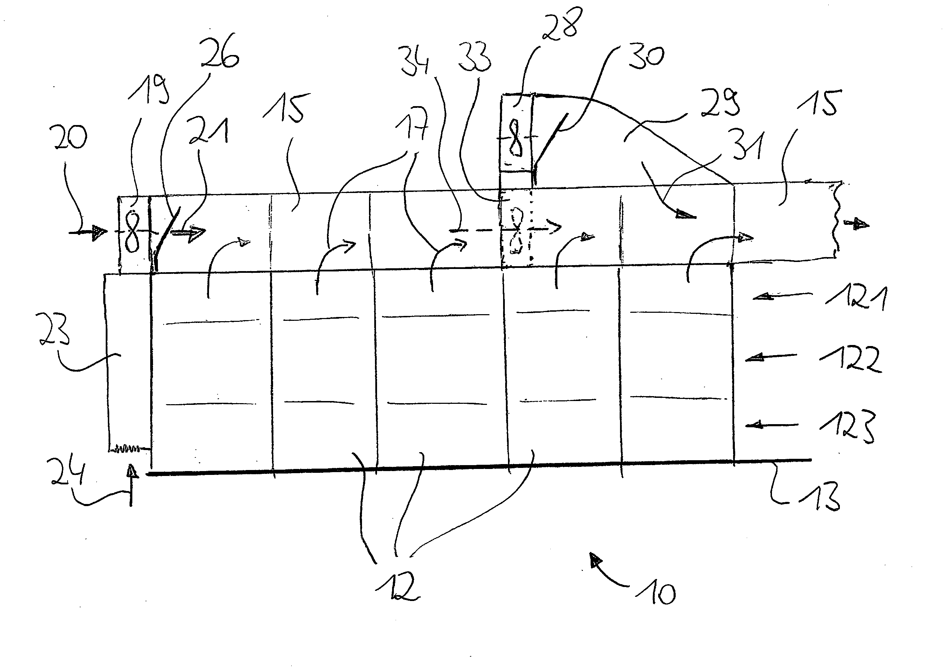

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt eine schematische Seitenansicht eines Ausführungsbeispiels einer erfindungsgemäßen elektrischen Schaltanlage.

In der Figur ist eine elektrische Schaltanlage 10 dargestellt, bei der es sich beispielsweise um eine Mittelspannungsschaltanlage handeln kann, insbesondere um eine luftisolierte Mittelspannungsschaltanlage. Die Schaltanlage 10 besteht aus einer Mehrzahl von Schaltfeldern 12. Die einzelnen Schaltfelder 12 weisen jeweils ein im Wesentlichen quaderförmiges Gehäuse auf. Die Schaltfelder 12 sind in einem nicht-dargestellten Anlagenraum nebeneinander auf einem Boden 13 aufgestellt.

Die Schaltfelder 12 sind in einem oberen Bereich 121 in nicht-dargestellter Weise über Sammelschienen elektrisch miteinander verbunden. In einem mittleren Bereich 122 sind in den einzelnen Schaltfeldern 12 unterschiedliche elektrische Komponenten untergebracht, beispielsweise Leistungsschalter, Trenner/Erder-Schalter und dergleichen. Über diese elektrischen Komponenten sind in einem unteren Bereich 123 unter anderem Abzweigungen von den Sammelschienen zu elektrischen Verbrauchern realisiert.

Oberhalb des oberen Bereichs 121 der Schaltfelder 12 ist ein Ausleitungskanal 15 angeordnet. Der Ausleitungskanal 15 erstreckt sich in einer im Wesentlichen horizontalen Richtung über die Mehrzahl der Schaltfelder 12. Der Ausleitungskanal 15 kann beispielsweise einen rechteckigen Querschnitt aufweisen und aus einem entsprechend quaderförmigen Gehäuse aufgebaut sein. Es versteht sich, dass der Ausleitungskanal 15 auch einen anderen Querschnitt bzw. Aufbau aufweisen kann. Der Ausleitungskanal 15 kann sich über sämtliche Schaltfelder 12 oder nur über einen Teil der Schaltfelder 12 erstrecken.

Der Innenraum jedes Schaltfelds 12 ist über eine oder mehrere nicht-dargestellte Öffnungen an der Oberseite des oberen Bereichs 121 mit dem Inneren des Ausleitungskanals 15 verbunden. Es kann somit Luft oder Gas aus jedem der einzelnen Schaltfelder 12 in den Ausleitungskanal 15 entweichen. Dies ist in der Figur beispielhaft durch die Pfeile 17 dargestellt.

An einem Ende des Ausleitungskanals 15, in der Figur am linken Ende des Ausleitungskanals 15, ist ein Lüfter 19 vorgesehen. Im vorliegenden Ausführungsbeispiel weist der Lüfter 19 eine etwa horizontal ausgerichtete Lüfterachse auf. Es versteht sich, dass auch andere Ausgestaltungen des Lüfters 19 denkbar sind.

Der Lüfter 19 kann Luft oder Gas aus einem Bereich ansaugen, der sich außerhalb der Schaltanlage 10 oder außerhalb des Anlagenraums befindet. Dies ist in der Figur durch den Pfeil 20 dargestellt. Der Lüfter 19 weist hierzu eine Ansaugöffnung auf, die im Wesentlichen oberhalb des oberen Bereichs 121 der Schaltfelder 12 angeordnet ist.

Am anderen Ende des Ausleitungskanals 15, in der Figur am rechten Ende, ist der Ausleitungskanal 15 nach außen ins Freie offen.

Im eingeschalteten Zustand des Lüfters 19 entsteht eine Luft- oder Gasströmung in dem Ausleitungskanal 15, die sich von der Ansaugöffnung des Lüfters 19 in Richtung zu dem offenen Ende des Ausleitungskanals 15 bewegt. Dies ist in der Figur durch den Pfeil 21 dargestellt.

Alternativ oder zusätzlich kann der Lüfter 19 mit einem Ansaugkanal 23 verbunden sein, der im Wesentlichen in vertikaler Richtung ausgerichtet ist, und über den der Lüfter 19 die Luft oder das Gas aus einem Bereich ansaugen kann, der sich außerhalb der Schaltanlage 10 etwa im unteren Bereich 123 der Schaltfelder 12 befindet. Dies ist in der Figur durch den Pfeil 24 dargestellt.

In dem genannten unteren Bereich 123 der Schaltfelder 12 ist aufgrund des in vertikaler Richtung vorhandenen Temperaturgradienten eine geringere Temperatur vorhanden als im oberen Bereich 121. Damit ist es gegebenenfalls möglich, den Lüfter 19 mit einer geringeren Leistung zu versehen.

Ist ein derartiger Ansaugkanal 23 vorhanden, so ist es möglich, dass am offenen Ende des Ansaugkanals 23, also in dem unteren Bereich 123 der Schaltfelder 12 ein weiterer Lüfter vorgesehen ist. Gegebenenfalls kann in diesem Fall der Lüfter 19 entfallen, so dass nur ein einziger Lüfter am offenen Ende des Ansaugkanals 23 vorhanden ist.

Auf der dem Ausleitungskanal 15 zugewandten Seite ist an dem Lüfter 19 eine Verschlussklappe 26 angebracht. Im vorliegenden Ausführungsbeispiel ist die Verschlussklappe 26 um eine Achse schwenkbar, die in vertikaler Richtung unterhalb der Verschlussklappe 26 angeordnet und in einer etwa horizontalen Richtung ausgerichtet ist. Es versteht sich, dass die Verschlussklappe 26 auch anderweitig schwenkbar mit dem Lüfter 19 oder mit dem Ausleitungskanal 15 verbunden sein kann.

Die Verschlussklappe 26 weist einen geöffneten und einen geschlossenen Zustand auf. In dem geschlossenen Zustand kann keine Luft und kein Gas aus den Schaltfeldern 12 zu dem Lüfter 19 gelangen. Der Lüfter 19 ist insoweit im geschlossenen Zustand der Verschlusskappe 26 gegenüber dem Innenraum der Schaltfelder 12 abgetrennt.

Die Verschlussklappe 26 ist derart ausgebildet, dass sie im eingeschalteten Zustand des Lüfters 19 geöffnet ist. Insbesondere ist die Verschlussklappe 26 derart ausgebildet, dass sie von der Luft- oder Gasströmung, die von dem Lüfter 19 erzeugt wird, automatisch, also ohne weitere Maßnahmen geöffnet wird.

Weiterhin ist die Verschlussklappe 26 derart ausgebildet, dass sie bei einem Überdruck, der in einem der Schaltfelder 12 entsteht, geschlossen wird, und zwar auch gegen die von dem Lüfter 19 erzeugte Luft- oder Gasströmung. Insbesondere ist die Verschlussklappe 26 derart ausgebildet, dass sie von einem Überdruck in einem der Schaltfelder 12 automatisch, also ohne weitere Maßnahmen, und gegen die von dem Lüfter 19 erzeugte Luft- oder Gasströmung geschlossen wird.

Alternativ oder zusätzlich ist ein Lüfter 28 vorgesehen, der über einen Zuführkanal 29 mit dem Ausleitungskanal 15 verbunden ist. Im vorliegenden Ausführungsbeispiel ist der Lüfter 28 oberhalb des Ausleitungskanals 15 angeordnet. Es ist auch möglich, dass der Lüfter 28 auf etwa derselben Höhe wie der Ausleitungskanal 15, aber in horizontaler Richtung vor oder hinter dem Ausleitungskanal 15 angeordnet ist.

Der Lüfter 28 ist im Wesentlichen gleichartig ausgebildet wie der Lüfter 19. Der Lüfter 28 ist auf seiner dem Zuführkanal 29 zugewandten Seite mit einer Verschlussklappe 30 versehen. Die Verschlussklappe 30 ist im Wesentlichen gleichartig ausgebildet wie die Verschlussklappe 26.

Der Lüfter 28 und der Zuführkanal 29 sind derart angeordnet und miteinander sowie mit dem Ausleitungskanal 15 verbunden, dass im eingeschalteten Zustand des Lüfters 28 Luft oder Gas von einem Bereich außerhalb der Schaltanlage 10 angesaugt und in Richtung zu dem Ausleitungskanal 15 geführt wird. Im eingeschalteten Zustand des Lüfters 28 entsteht damit eine Luft- oder Gasströmung in dem Zuführkanal 29 und in dem Ausleitungskanal 15, die sich von dem Lüfter 28 in Richtung zu dem offenen Ende des Ausleitungskanals 15 bewegt. Dies ist in der Figur durch den Pfeil 31 dargestellt.

Im Verlauf des Ausleitungskanals 15 von dem Lüfter 19 zu seinem offenen Ende kann ein weiterer Lüfter 33 vorgesehen sein. Der Lüfter 33 kann innerhalb des Ausleitungskanals 15 angeordnet sein, wie dies in der Figur gestrichtelt dargestellt ist. In seinem eingeschalteten Zustand erzeugt der Lüfter 33 eine Luft- oder Gasströmung, die in Richtung zu dem offenen Enden des Ausleitungskanals 15 gerichtet ist. Dies ist in der Figur durch den Pfeil 34 dargestellt.

Der Lüfter 33 kann, wie dies in der Figur dargestellt ist, ohne Verschlussklappen vorgesehen sein. In diesem Fall kann der Lüfter 33 nicht von dem Innenraum der Schaltfelder 12 abgetrennt werden.

Alternativ kann der Lüfter 33 in nicht-dargestellter Weise auf seiner Ansaug- und seiner Abblasseite mit jeweils einer Verschlussklappe versehen sein. Diese Verschlussklappen können dabei in entsprechender Weise ausgebildet sein wie die Verschlussklappe 26. Damit ist es möglich, den Lüfter 33 bei einem Überdruck in den Schaltfeldern 12 von dem Innenraum der Schaltfelder 12 abzutrennen.

Die beschriebenen Lüfter 19, 28, 33 können gleichartig ausgebildet sein, so dass ein Austausch zwischen den einzelnen Lüftern ohne Weiteres möglich ist.

Im Betrieb des elektrischen Schaltfelds 10 können einzelne, mehrere oder alle Lüfter 19, 28, 33 vorhanden sein. Die von den einzelnen Lüftern 19, 28, 33 erzeugten Luft- oder Gasströmungen addieren sich dann gegebenenfalls.

Im normalen Betrieb des elektrischen Schaltfelds 10 geben die verschiedenen elektrischen Komponenten der einzelnen Schaltfelder 12 Wärme ab. Durch natürliche Konvektion wird diese Wärme innerhalb der einzelnen Schaltfelder 12 als erwärmte Luft- oder Gasströmung nach oben und gemäß den Pfeilen 17 in den Ausleitungskanal 15 transportiert.

Durch die von dem/den Lüfter/n erzeugte Luft- oder Gasströmung innerhalb des Ausleitungskanals 15 ist/sind die Verschlussklappe/n 26, 30 geöffnet. Die von den Schaltfeldern 12 abgegebene Wärme wird damit in Richtung zu dem offenen Ende des Ausleitungskanals 15 abtransportiert.

Insgesamt wird damit Wärme, die im Betrieb der elektrischen Schaltanlage 10 entsteht, fortlaufend über den Ausleitungskanal 15 aus dem Innenraum der einzelnen Schaltfelder 12 abtransportiert. Die Temperatur im Innenraum der Schaltfelder 12 bleibt damit im Betrieb der Schaltanlage 10 im Wesentlichen konstant oder erhöht sich nur unwesentlich.

Tritt in einem der Schaltfelder 12 der elektrischen Schaltanlage 10 eine Fehlfunktion auf, beispielsweise ein sogenannter Störlichtbogen, so kann dies zur Folge haben, dass sich die Temperatur in dem betroffenen Schaltfeld 12 sehr schnell und sehr stark erhöht. Dies ist gleichbedeutend damit, dass sich auch der Druck in diesem Schaltfeld 12 sehr schnell und sehr stark erhöht.

Die genannte Druckerhöhung pflanzt sich aus dem betroffenen Schaltfeld 12 gemäß den Pfeilen 17 in den Ausleitungskanal 15 fort. Stellt die Druckerhöhung einen ausreichend großen Überdruck dar, so bewirkt dieser Überdruck, dass die Verschlussklappe/n 26, 30 des/der vorhandenen Lüfter/s 19, 28, 33 geschlossen werden. Die stark erhöhte Temperatur der in dem Ausleitungskanal 15 nunmehr vorhandenen Luft oder Gase kann somit die Lüfter 19, 28, 33 nicht mehr erreichen.

Eine Schädigung der Lüfter 19, 28, 33 durch die bei einer Fehlfunktion gegebenenfalls entstehende erhitzte Luft oder das in diesem Fall entstehende erhitzte Gas ist damit nicht möglich.

Die erhitzte Luft oder das erhitzte Gas kann über den Ausleitungskanal 15 aus dem Innenraum der elektrischen Schaltanlage 10 nach außen ins Freie entweichen. Die erhitzte Luft oder das erhitzte Gas wird damit kontrolliert aus der Schaltanlage 10 abgeführt. Damit kann eine mögliche Schädigung des betroffenen Schaltfelds 12 der Schaltanlage 10 vermindert werden.

## Patentansprüche

1. Elektrische Schaltanlage (10), insbesondere luftisolierte Mittelspannungsschaltanlage, mit einer Mehrzahl von Schaltfeldern (12), die nebeneinander angeordnet sind, und mit einem Ableitungskanal (15), über den Luft oder Gas aus dem Innenraum der Schaltfelder (12) nach außen ableitbar ist, **dadurch gekennzeichnet, dass** der Ableitungskanal (15) oberhalb der Schaltfelder (15) angeordnet ist und sich zumindest über einen Teil der Mehrzahl der Schaltfelder (12) erstreckt, dass der Ableitungskanal (15) über Öffnungen mit dem Innenraum der Schaltfelder (12) verbunden ist, und dass dem Ableitungskanal (15) mindestens ein Lüfter (19, 28, 33) zugeordnet ist, mit dem eine Luft- oder Gasströmung in dem Ableitungskanal (15) erzeugbar ist.

2. Schaltanlage (10) nach Anspruch 1, wobei der Lüfter (19) an einem Ende des Ableitungskanals (15) angeordnet ist.

3. Schaltanlage (10) nach einem der Ansprüche 1 oder 2, wobei der Lüfter (33) sich innerhalb des Ableitungskanals (15) befindet.

4. Schaltanlage (10) nach einem der Ansprüche 1 bis 3, wobei der Lüfter (28) oberhalb des Ableitungskanals (15) oder etwa auf derselben Höhe wie der Ableitungskanal (15), aber in horizontaler Richtung vor oder hinter dem Ableitungskanal (15) angeordnet ist.

5. Schaltanlage (10) nach Anspruch 4, wobei der Lüfter (28) über einen Zuführkanal (29) mit dem Ableitungskanal (15) verbunden ist.

6. Schaltanlage (10) nach einem der vorstehenden Ansprüche, wobei dem Lüfter (19, 28, 33) mindestens eine Verschlussklappe (26, 30) zugeordnet ist, mit der/denen der Lüfter (19, 28, 33) von dem Innenraum der Schaltfelder (12) abtrennbar ist.

7. Schaltanlage (10) nach einem der vorstehenden Ansprüche, wobei der Ableitungskanal (15) in einer etwa horizontalen Richtung angeordnet ist.

8. Schaltanlage (10) nach einem der vorstehenden Ansprüche, wobei der Lüfter (19) mit einem Ansaugkanal (23) verbunden ist.

9. Schaltanlage (10) nach Anspruch 8, wobei der Ansaugkanal (23) in einer etwa vertikalen Richtung angeordnet ist.

10. Schaltanlage (10) nach einem der Ansprüche 8 oder 9, wobei ein weiterer Lüfter am offenen Ende des Ansaugkanals (23) angeordnet ist.

11. Schaltanlage (10) nach einem der vorstehenden Ansprüche, wobei im Betrieb der Schaltanlage (10) entstehende Wärme durch natürliche Konvektion in den Ableitungskanal (15) transportiert und dort von der von dem Lüfter (19, 28, 33) erzeugten Luft- oder Gasströmung nach außen abtransportiert wird.

12. Schaltanlage (10) nach einem der vorstehenden Ansprüche, wobei in einem Fehlerfall entstehende erhitzte Luft oder Gase über den Ableitungskanal (15) nach außen abgeleitet wird.
